# EUROPEAN PATENT APPLICATION

(11) **EP 3 351 445 A1**
(43) Date of publication of application: **25.07.2018**
(21) Application number: 17152568.6
(22) Date of filing: 23.01.2017
(51) Int. Cl.: B60T 8/36, B60T 8/40

(54) **BRAKE SYSTEM FOR MOTOR-VEHICLES**

(71) Applicant: FCA Italy S.p.A., 10135 Torino (IT)
(72) Inventor: BADINO, Renato, 10135 Torino (IT); LUCÀ, Stefano, 10135 Torino (IT)
(74) Representative: Notaro, Giancarlo

(57) **Abstract**

In a motor vehicle equipped with an electrically assisted brake system, this brake system comprises a master cylinder (TMC) and a fluid reservoir (RES) that form part of a first integrated unit (400) having a supporting structure rigidly connected to a transverse firewall (300) of the structure of the motor vehicle, which separates the engine compartment from the passenger compartment and supports the dashboard of the motor vehicle. The brake system includes a fluid-pressure source (SO) driven by an electric motor (M) controlled by an electronic control unit (ECU). The brake system moreover includes a simulator module (SM) for simulating the force of reaction on the brake pedal and a solenoid-valve module (EVM), which controls the hydraulic connection of the brake devices (FL, FR, RL, RR) associated to the wheels of the motor vehicle with the master cylinder (TMC) and with the fluid-pressure source (SO). The fluid-pressure source (SO), with the electric motor (M) associated thereto, the electronic control unit (ECU), the simulator module (SM), and the solenoid-valve module (EVM) form part of a second integrated unit (500) having a supporting structure connected to the structure of the motor vehicle (200) in a position spaced apart from said first integrated unit (400), with interposition of elastic damping supports (D) between the supporting structure of said second integrated unit (500) and the structure of the motor vehicle (200).

## Description

### Field of the invention

The present invention relates to brake systems for motor vehicles, of the type including:
- a plurality of hydraulically operated brake devices, associated to respective wheels of the motor vehicle;
- a hydraulic master cylinder driven by a brake pedal, having at least one fluid chamber in hydraulic communication with the brake devices;
- a fluid reservoir hydraulically connected to said at least one chamber of the master cylinder;
- a fluid-pressure source, driven by an electric motor and hydraulically connected both to said fluid reservoir and to said brake devices;
- an electronic control unit, adapted to control said electric motor for operating the fluid-pressure source as a function of a detected position of the brake pedal;
- a module for simulating the force of reaction on the brake pedal, hydraulically connected to said at least one chamber of the master cylinder; and
- a solenoid-valve module, comprising a series of solenoid valves governed by said electronic unit for controlling hydraulic communication of the brake devices with said at least one chamber of said master cylinder and with said fluid-pressure source.

### Prior art

A braking system of the type referred to above is, for example, described and illustrated in US 2016/0023644 A1. In this known system, the brake devices associated to the wheels of the motor vehicle are normally operated by the aforesaid fluid-pressure source controlled by an electric motor on the basis of a detected position of the brake pedal. In this mode of operation, the module for simulating the force of reaction on the brake pedal supplies to the driver a reaction to the force applied by him on the pedal. In the case of failure of the electrical operation, the brake devices can in any case be operated following upon activation of the master cylinder by the brake pedal.

According to the aforesaid prior art, the master cylinder with the brake pedal associated thereto, the fluid reservoir, the fluid-pressure source with the electric motor associated thereto, the electronic control unit, the force-simulator module, and the aforesaid solenoid-valve module are all part of a single integrated unit, having a supporting casing rigidly connected to a wall of the structure of the motor vehicle, typically the transverse cowl panel or firewall that separates the engine compartment from the passenger compartment of the motor vehicle and that also has the function of supporting the dashboard of the motor vehicle.

Tests conducted by the Applicant have shown that this arrangement involves some drawbacks. In particular, the solenoid-valve module that controls operation of the brake devices generates vibrations that are transmitted to the aforesaid transverse wall and to the dashboard of the motor vehicle that is mounted on the wall. On the other hand, it is not possible to envisage mounting of the aforesaid unit on the wall of the structure of the motor vehicle by interposition of elastic damping supports in so far as the position of the master cylinder with respect to the brake pedal must be rigorously defined, which implies a rigid connection between the master cylinder and the structure of the motor vehicle. A further drawback of the arrangement mentioned above lies in the fact that the unit described above presents considerable dimensions and weight, which involves the problem of finding an adequate space for installation on the firewall, both in the left-hand area and in the right-hand area, it being necessary to be able to equip motor vehicles both with left-hand drive and with right-hand drive. Lastly, there is also the problem that the unit itself constitutes a body of considerable encumbrance within the engine compartment, which in the event of head-on collision can jeopardize the capacity of the front portion of the structure of the vehicle to absorb the impact without causing any intrusion of parts of the vehicle in the passenger compartment.

### Object of the invention

The object of the present invention is to overcome the drawbacks mentioned above.

### Summary of the invention

With a view to achieving the aforesaid object, the subject of the invention is a motor vehicle having a motor-vehicle structure defining an engine compartment and a passenger compartment and including a transverse wall that separates the engine compartment from the passenger compartment, the motor vehicle comprising a brake system having all the features that have been referred to at the start of the present description and being moreover characterized in that the aforesaid master cylinder and said fluid reservoir form part of a first integrated unit having a supporting structure rigidly connected to said transverse wall of the structure of the motor vehicle, and in that said fluid-pressure source with the electric motor associated thereto, said electronic control unit, said force-simulator module, and said solenoid-valve module form part of a second integrated unit having a supporting structure connected to the structure of the motor vehicle in a position spaced apart from said first integrated unit, with interposition of elastic damping supports between the supporting structure of said second integrated unit and the structure of the motor vehicle.

Thanks to the arrangement described above, the invention affords a series of important advantages. In the first place, the solenoid-valve module forming part of the brake system is supported on the structure of the motor vehicle, for example on the floor panel of the motor vehicle, by interposition of elastic damping supports, which affords the advantage that the vibrations generated by the solenoid-valve module during its operation are not transmitted, or are transmitted to a reduced extent, to the structure of the motor vehicle, hence without generating any undesired vibration of the dashboard or of other parts of the passenger compartment. Furthermore, the aforesaid first integrated unit rigidly connected to the firewall is constituted only by the master cylinder with the fluid reservoir. This unit is hence characterized by a weight and dimensions that are markedly lower than those of the single integrated unit provided according to the prior art. Consequently, it fits easily into both the left-hand part and the right-hand part of the firewall, also on small-sized motor vehicles. Furthermore, given the reduction of weight and dimensions of the part that is carried by the firewall, it is consequently possible to reduce the structural sizing of the firewall. Finally, also the risk for the passengers in the event of head-on collision of the vehicle is consequently reduced.

### Detailed description of the invention

Further features and advantages of the invention will emerge from the ensuing description with reference to the annexed drawings, which are provided purely by way of non-limiting example and in which:
- Figure 1 is a perspective view of a load-bearing structure of a motor vehicle, represented in which is the location of the two separate units that constitute the main components of the braking system according to the invention;
- Figure 2 is a schematic sectional view in a longitudinal vertical plane of the motor vehicle, which shows at an enlarged scale the location of the two aforesaid units forming part of the braking system according to the invention;
- Figure 3 is a diagram of a braking system according to the prior art; and
- Figure 3A is a simplified diagram of the known solution illustrated in Figure 3.

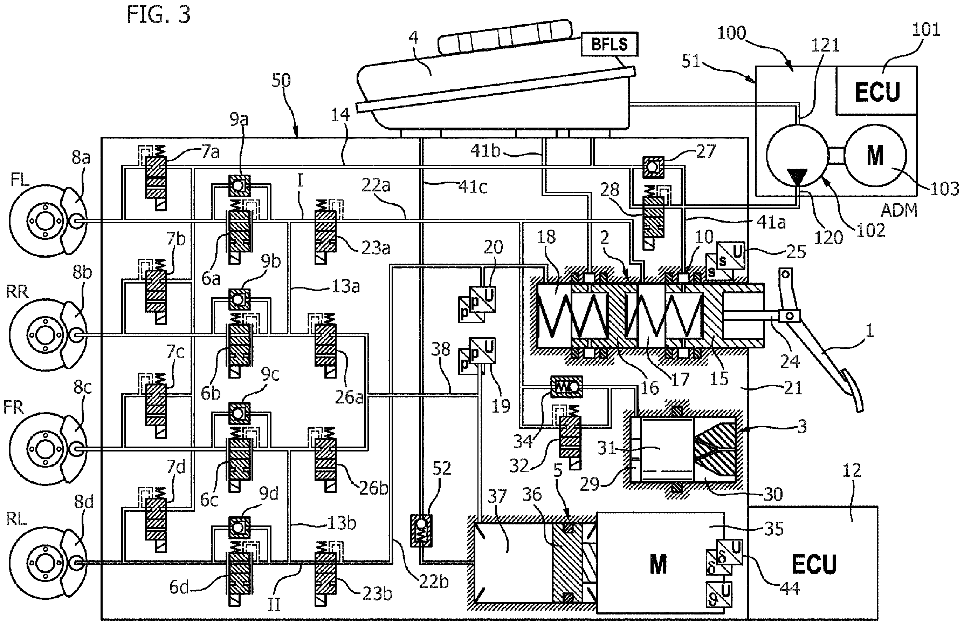

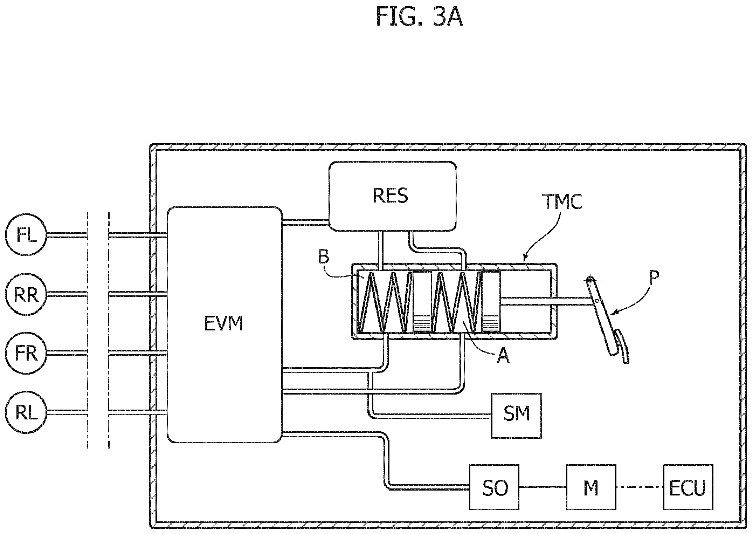

Figure 3 of the annexed drawings shows a diagram of a motor-vehicle braking system that is illustrated in US 2016/0023644 A1. In this figure, the references FL, RR, FR, RL designate brake devices of any known type, respectively associated to the left front wheel, to the right rear wheel, to the right front wheel, and to the left rear wheel of a motor vehicle. The braking system comprises a master cylinder 2, which, in the case in point, is a tandem master cylinder including two pressurized-fluid chambers 17, 18 associated to two pumping pistons 15, 16, respectively, arranged in series with respect to one another and recalled by respective elastic means (illustrated only schematically in Figure 3) towards a resting position thereof. The pumping pistons of the tandem master cylinder can be operated by means of the brake pedal 1, according to the conventional technique. Once again with reference to Figure 3, the reference number 4 designates a fluid reservoir that is connected by means of lines 41 a, 41 b to the two chambers of the master cylinder 2. The reference 5 designates an electrically operated fluid-pressure source. The source 5 includes a pressurized-fluid chamber 37, facing which is a piston 36 the position of which is controlled by an electric motor M, designated by the reference 35. According to the prior art, the electric motor is controlled by an electronic control unit (ECU) 12 on the basis of a detected position of the brake pedal 1. For this purpose, associated to the master cylinder 2 is a sensor 25 adapted to detect, directly or indirectly, the position of the brake pedal 1 in order to send to the electronic unit 12 a signal indicating the position. The reference number 3 designates a module for simulating the force of reaction on the brake pedal, constituted by a cylinder including a chamber 29, which is in communication with the two chambers 17, 18 of the master cylinder 2 and facing which is a piston 31 co-operating with a rubber buffer contained within the simulator module 3. Operation of the brake pedal causes a displacement of fluid within the chamber 29 of the simulator module 3, with consequent displacement of the piston 31 against the rubber buffer associated thereto, in such a way as to generate a force that opposes the movement of the brake pedal and simulates the reaction perceived by the driver in the case of a conventional braking system. The system finally comprises a solenoid-valve module, including a plurality of solenoid valves 6a-6d, 7a-7d, 23a, 23b, 26a, 26b, which are governed by the electronic control unit 12 and/or by further electronic units for controlling hydraulic communication of the brake devices FL, RR, FR, RL with the two chambers of the master cylinder and with the electrically controlled fluid-pressure source 5. In the case of the known system illustrated in Figure 3, there is also envisaged an additional unit 100 comprising an additional fluid-pressure source 102, controlled by an electric motor 103 and by an electronic unit 101. However, for the purposes of the present invention, the additional unit 100 is not essential and may not be provided.

Figure 3A is a simplified diagram of the system illustrated in Figure 3. In this figure, the solenoid-valve module is designated by EVM, whereas the pressurized-fluid reservoir 4 of Figure 3 is designated by RES. The tandem master cylinder is designated by TMC. It is governed by the brake pedal P and comprises two chambers A and B. The simulator module and the fluid-pressure source are designated respectively by SM and SO. As already illustrated in Figure 3, the fluid-pressure source SO is controlled by an electric motor M, which is in turn controlled by an electronic control unit ECU.

According to the prior art, the units EVM, RES, TMC, SM, SO, M, and ECU are all contained in a single supporting casing 100 (Figure 3A), which is rigidly connected to a wall of the structure of the motor vehicle, typically the firewall that carries the dashboard of the motor vehicle.

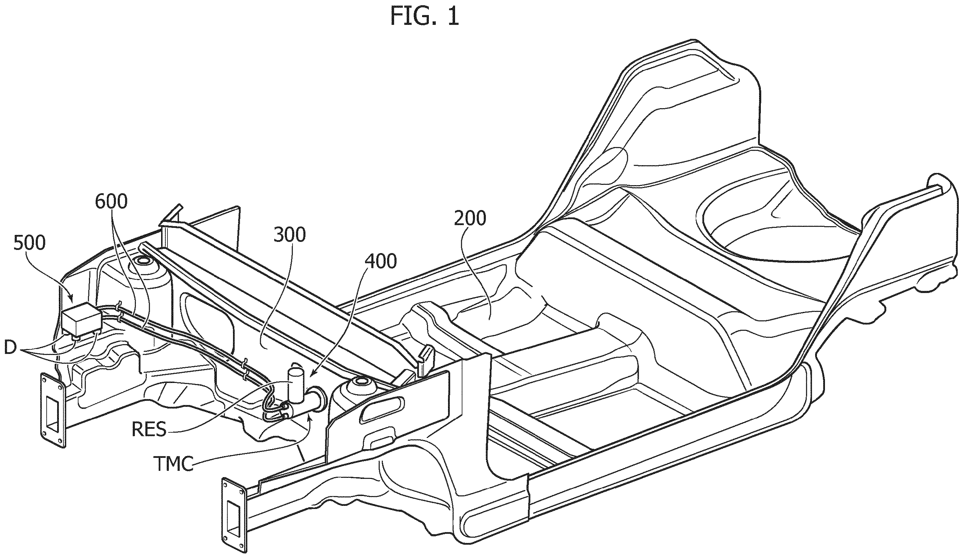

Figure 1 of the annexed drawings illustrates by way of example the load-bearing structure made of sheet metal of a motor vehicle, including a floor-panel structure 200 and a transverse front firewall 300 that is to separate the engine compartment, located in front of it, from the passenger compartment of the motor vehicle, located behind the wall 300. As already mentioned, according to the prior art, the load-bearing structure 100 of the integrated unit comprising the modules EVM, RES, TMC, SM, SO, M, and ECU is rigidly connected to the wall 300 adjacent to the area where the brake pedal is positioned. As has been illustrated above, this known solution involves some drawbacks. First of all, the solenoid-valve module EVM generates, during operation, considerable vibrations that are transmitted to the wall 300 and from this to the motor-vehicle dashboard that is carried thereby. This problem cannot be solved by interposing elastic damping supports between the casing 100 of the integrated unit and the structure of the motor vehicle in so far as the position of the master cylinder TMC must be rigorously defined with respect to the position of the brake pedal, for proper operation of the system. A further drawback of the known solution is that the integrated unit described above has significant weight and dimensions, which involves problems in finding a location for this unit, above all in the case of small-sized vehicles. It is necessary, among other things, to provide an adequate space adjacent to the wall 300 both on the left-hand side and on the right-hand side, it being necessary for the motor vehicle to be prearranged for possibly being equipped with a left-hand drive or a right-hand drive. Finally, the integrated unit of the prior art constitutes a body of considerable size within the engine compartment, which increases the risk for the passenger in the case of head-on collision of the vehicle.

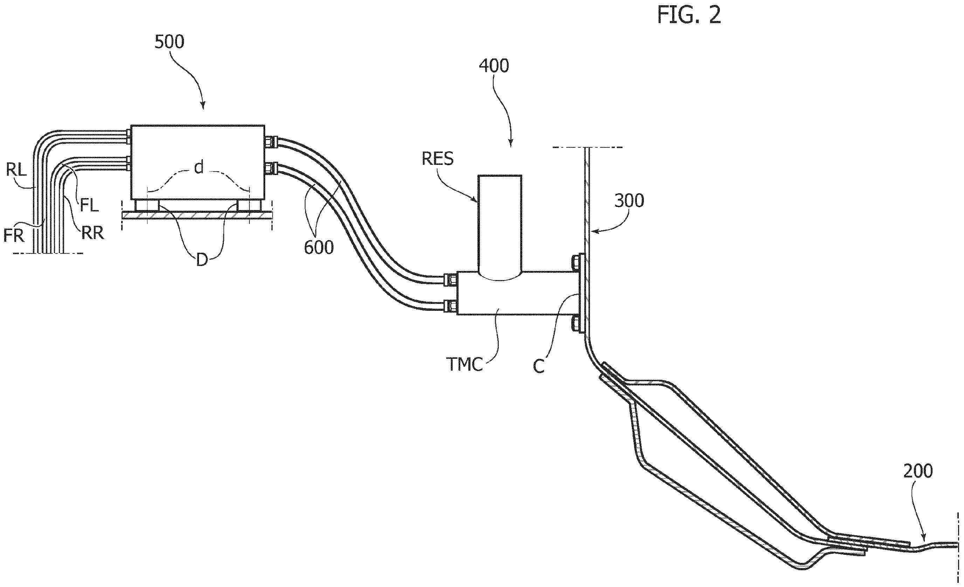

The present invention is able to solve all the aforesaid problems thanks to a new arrangement of the modules making up the braking system. According to the invention, the master cylinder TMC and the fluid reservoir RES form part of a first integrated unit 400 (see Figures 1 and 2) that is rigidly connected to the transverse wall 300 of the structure of the motor vehicle that separates the engine compartment from the passenger compartment and that supports the dashboard of the motor vehicle. More specifically, the body of the master cylinder TMC has a flange C screwed to the wall 300 on the side of the engine compartment, whereas the casing of the reservoir RES is rigidly connected to the casing of the master cylinder TMC. Instead, the fluid-pressure source SO, the electric motor M associated thereto, the electronic control unit ECU, the force-simulator module SM, and the solenoid-valve module EVM form part of a second integrated unit 500 that is connected to the structure of the motor vehicle in a position set at a distance from the first integrated unit 400, by means of screws (of which only the axes "d" are illustrated), and with interposition of elastic damping supports D, which enable damping of the vibrations transmitted by the solenoid-valve module EVM so as not to transmit them, or transmit them only to a minimal extent, to the structure of the motor vehicle. In any case, the unit 500 is preferably connected to the floor panel 200 and in any case not to the wall 300, so that any residual vibration is not in any case transmitted to the dashboard.

Figure 2 of the annexed drawings shows by way of example the positioning of the second integrated unit 500 on the structure of the motor vehicle, within the engine compartment in a position at a distance from the first integrated unit 400, which is also here positioned on the wall 300 adjacent to the area where the brake pedal is located. The hydraulic connections between the first integrated unit 400 and the second integrated unit 500 are represented schematically in Figures 1 are 2 with tubes 600 (illustrated only schematically). In general, this hydraulic connection must envisage rigid tubes in which it is possible (if necessary) to insert a stretch made of rubber or metal plait for damping possible vibrations. The second integrated unit 500 is of course hydraulically connected by means of respective ducts FL, RR, FR, RL to the brake devices associated to the four wheels of the motor vehicle.

Of course, without prejudice to the principle of the invention, the details of construction and the embodiments may vary widely with respect to what has been described and illustrated herein purely by way of example, without thereby departing from the scope of the present invention.

## Claims

1. A motor vehicle, comprising:
- a motor-vehicle structure (200) defining an engine compartment and a passenger compartment, having a transverse wall (300) that separates the engine compartment from the passenger compartment;
- a brake system of the motor vehicle, including:
- a plurality of hydraulically operated brake devices (FL, FR, RR, RL) associated to respective wheels of the motor vehicle;
- a hydraulic master cylinder (TMC) driven by a brake pedal (P) and having at least one chamber (A, B) in hydraulic communication with the brake devices (FL, FR, RR, RL);
- a fluid reservoir (RES) connected to said at least one chamber (A, B) of the master cylinder (TMC);
- a fluid-pressure source (SO), driven by an electric motor (M) and hydraulically connected both to said fluid reservoir (RES) and to said brake devices (FL, FR, RR, RL);
- an electronic control unit (ECU), adapted to control said electric motor (M) for operating the fluid-pressure source (SO) as a function of a detected position of the brake pedal (P);
- a simulator module (SM) for simulating the force of reaction on the brake pedal, hydraulically connected to said at least one chamber (A, B) of the master cylinder (TMC); and
- a solenoid-valve module (EVM), comprising a series of solenoid valves governed by said electronic unit (ECU) for controlling hydraulic communication of the brake devices (FL, RR, FR, RL) with said at least one chamber (A, B) of said master cylinder (TMC) and with said fluid-pressure source (SO),
said motor vehicle being **characterized in that**:
said master cylinder (TMC) and said fluid reservoir (RES) form part of a first integrated unit (400) having a supporting structure rigidly connected to said transverse wall (300) of the structure (200) of the motor vehicle; and
said fluid-pressure source (SO) with the electric motor (M) associated thereto, said control unit (ECU), said force-simulator module (SM), and said solenoid-valve module (EVM) form part of a second integrated unit (500) having a supporting structure connected to the structure of the motor vehicle (200) in a position spaced apart from said first integrated unit (400), with interposition of elastic damping supports (D) between the supporting structure of said second integrated unit (500) and the structure of the motor vehicle.

2. The motor vehicle according to Claim 1, **characterized in that** conduits are provided for hydraulic communication between the first integrated unit (400) and the second integrated unit (500).

3. The motor vehicle according to Claim 1, **characterized in that** the supporting casing of said second integrated unit (500) is rigidly connected by means of screws (d), with interposition of the aforesaid elastic damping supports (D), to the motor-vehicle structure.

4. The motor vehicle according to Claim 1, **characterized in that** the aforesaid master cylinder (TMC) has a supporting casing having a flange (C) rigidly connected to the aforesaid transverse wall (300) of the structure of the motor vehicle and **in that** the casing of said fluid reservoir (RES) is rigidly connected to the supporting casing of said master cylinder (TMC).
